# EUROPÄISCHE PATENTSCHRIFT

(11) **EP 1 672 387 B1**
(45) Veröffentlichungstag und Bekanntmachung des Hinweises auf die Patenterteilung: **15.08.2012**
(21) Anmeldenummer: 04030191.3
(22) Anmeldetag: 20.12.2004
(51) Int. Cl.: G01S 13/75, G01S 13/82, G01S 13/34, G01S 7/35

(54) **Radarsystem zur Lokalisierung eines mobilen Bediengeräts**
Radarsystem for locating a mobile control device
Système radar pour localiser un dispositif commande mobile

(43) Veröffentlichungstag der Anmeldung: 21.06.2006
(73) Patentinhaber: SIEMENS AKTIENGESELLSCHAFT, 80333 München (DE)
(72) Erfinder: Baumgartner, Josef, 1160 Wien (AT); Gila, Janos Dr., 2340 Mödling (AT); Konrad, Wolfgang Dr., 2340 Mödling (AT); Skuk, Oskar, 1220 Wien (AT)

(56) Entgegenhaltungen:
- EP-A- 0 825 455
- DE-A1- 10 234 467
- DE-A1- 10 243 811
- DE-A1- 10 310 158
- US-A1- 2003 001 772
- US-A1- 2003 179 130
- PATENT ABSTRACTS OF JAPAN Bd. 2003, Nr. 12, 5. Dezember 2003 (2003-12-05) -& JP 2004 069467 A (HONDA MOTOR CO LTD), 4. März 2004 (2004-03-04)

## Beschreibung

Die Erfindung betrifft ein Radarsystem zur Lokalisierung mobiler Bedieneinrichtungen für Automatisierungskomponenten einer technischen Anlage und ein Konzept zur Plausibilitätsbewertung empfangener Radarsignale.

Technische Anlagen sind alle Arten von technischen Geräten und Systemen sowohl in Einzelanordnung als auch in datentechnischer Vernetzung z.B. über einen Feldbus. Bei industriellen Anwendungen fallen darunter einzelne Betriebsmittel, z.B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z.B. eine chemische Anlage oder Fertigungsstra-βe. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet. Zur Entlastung dieser Steuerungen weisen Automatisierungen weitere spezielle Geräte auf, welche eine Schnittstelle für Bedienpersonal bilden. Diese werden als Geräte zum "Bedienen- und Beobachten", abgekürzt "B+B", oder als HMI Geräte, d.h. Human Machine Interface, bezeichnet.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. Diese können stationär oder mobil ausgeführt sein. HMI Geräte dienen in einer vernetzten Automatisierung als Hilfsmittel für Bedienpersonal, um Prozessdaten der zu steuernden technischen Anlage an zeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Vielfach sind die HMI Geräte z.B. in Form von Terminals als stationäre Komponenten in ein Automatisierungssystem fest integriert. Derartige Terminals sind dann in der Regel fest über Kabelverbindungen mit dem Automatisierungssystem verbunden. Sind diese Terminals als Hand-Held Geräte ausgeführt, so ist deren Aktionsradius durch ein Anschlusskabel beschränkt. Hierdurch ist es in vielen Fällen gewährleistet, dass eine Bedienperson sicherheitsrelevante Bedienungen nur in unmittelbarer Nähe der technischen Anlage oder zumindest unter Einhaltung eines ausreichenden Sichtkontaktes vornehmen kann.

Anders ist dagegen die Situation, wenn ein HMI Gerät in Form eines mobilen Operators Panels ausgeführt ist. Ein solches mobiles Bedien- und Beobachtungsgerät kann z.B. über eine Funkstrecke mit dem Automatisierungssystem verbunden sein, die eine große Reichweite aufweist. So ist es in einem solchen Fall nicht ausgeschlossen, dass sich eine Bedienperson, die ein mobiles Bedien- und Beobachtungsgerät benutzt, sich so weit von einer dazugehörigen technischen Anlage entfernt, dass sicherheitsrelevante Bedienungen aus einer an sich unzulässigen Entfernung vorgenommen werden. In einem solchen Fall wäre dann die Personensicherheit nicht gewährleistet.

Zur Vermeidung einer Steuerung des Automatisierungssystems durch das mobile Bedien- und Beobachtungsgerät aus einer unzulässigen Entfernung ist es vorteilhaft, das Bedien- und Beobachtungsgerät zu lokalisieren und abhängig von seiner Position sicherheitsrelevante Bedienungen der technischen Anlage freizugeben oder zu deaktivieren. Hierzu kann das HMI System mit Auswertemitteln zur Verwaltung eines aktiven Bedienbereichs um die technische Anlage herum ausgestaltet werden. Die Lokalisierungsmittel werten den Abstand des mobilen Bedien- und Beobachtungsgeräts von der technischen Anlage aus, um detektieren zu können, ob sich das mobile Bedien- und Beobachtungsgerät innerhalb des aktiven Bedienbereichs befindet.

Die Lokalisierung des mobilen Bedien- und Beobachtungsgeräts kann z.B. mit Hilfe eines Radarsystems durchgeführt werden. Es erweist sich hierbei als zweckmäßig, an der technischen Anlage zumindest eine Transpondervorrichtung anzubringen, die in Reaktion auf Abfragesignale des Radarsystems Funkantwortsignale reflektiert oder aussendet, die wiederum vom Radarsystem zumindest zur Abstandsbestimmung ausgewertet werden können. Prinzipiell ist die Lokalisierung des mobilen Bedienund Beobachtungsgeräts mit Hilfe einer Vielzahl unterschiedlicher Radarsysteme realisierbar.

Zur Lokalisierung des mobilen Bedien- und Beobachtungsgeräts in einem Umkreis einiger Meter um die technische Anlage herum eignet sich z.B. die Verwendung eines frequenzmodulierenden Dauerstrich-Radarsystems. Ein solches Radarsystem, auch als Frequency Modulated Continous Wave (FMCW) bezeichnet, ermöglicht die Abstandsbestimmung zu einem reflektierenden Objekt unter Verwendung von kontinuierlicher, d.h. nicht gepulster, sondern continuous wave (cw), Radarstrahlung. Hierbei unterliegt die Frequenz der ausgesendeten Radarsignale einer periodischen Modulation.

Da sich die Sendefrequenz des Radarsignals kontinuierlich ändert, weisen ausgesendete und vom Objekt reflektierte Radarsignale beim Eintreffen in das Radarsystem eine Frequenzverschiebung auf, die einem Laufzeitunterschied entspricht. Dieser Laufzeitunterschied spiegelt den zweifachen Abstand zwischen dem Radarsystem und dem reflektierenden Objekt wieder. Zur Bestimmung einer Entfernung werden die empfangen Radarsignale typischerweise einer spektralen Analyse unterzogen. Erstellt man ein Leistungsspektrum über die Frequenzverschiebung des empfangenen Signals bezogen auf die Sendefrequenz, so geben Leistungsspitzen des Spektrums direkt Aufschluss über die Entfernung zu einem reflektierenden Objekt.

Große Frequenzverschiebungen entsprechen großen Laufzeitunterschieden und somit großen Entfernungen, während kleine Frequenzverschiebungen kleinen Laufzeitunterschieden und kleinen Entfernungen zum Radarsystem entsprechen.

Die Auswertung des Spektrums empfangener Radarsignale ist mitunter problematisch, da ein Spektrum typischerweise mehrere Leistungsspitzen aufweist, die nicht in einem direkten Zusammenhang zur Entfernung eines bestimmten reflektierenden Objekts oder Transponders stehen. Wird das Radarsystem z.B. in einer Umgebung mit reflektierenden Metalloberflächen betrieben, so entstehen typischerweise Leistungsspitzen im Spektrum, die auf Mehrfachreflexionen zurückzuführen sind. Ebenso kann z.B. die direkte Sichtverbindung zwischen einem Transponder und dem Radarsystem abhängig von der Position des mobilen Bedien- und Beobachtungsgeräts durch Radarstrahlung absorbierende Objekte unterbrochen oder zumindest die Ausbreitung der Radarsignale massiv beeinflusst werden.

Das Dokument Patent Abstracts of Japan, Publication No. = 2004/069467 offenbart ein FMCW-Radarsystem für Kraftfahrzeuge, welches ein Beat-Signal durch Mischen eines Sendesignals mit einem Empfangssignal generiert. Das Radarsystem diskriminiert ein Peak-Signal im Beat-Signal, das eine Signalstärke aufweist, die größer ist als eine erste Schwelle, wobei das Peak-Signal mittels einer Frequenz-Analyse des Beat-Signals erhalten wird. Das Radarsystem extrahiert mit Rauschen behaftete Frequenzbereiche, die durch Entfernen der Peak-Signale erhalten wurden und setzt eine neue zweite Schwelle durch Addition eines Wertes zur ersten Schwelle.

US 2003/001772 offenbart ein Radarsystem und ein Verfahren, in dem eine Ableitung eines FFT-Ausgangssignals berechnet wird, um ein Objekt innerhalb einer spezifizierten Detektionszone zu detektieren. Dabei wird die Frequenz, die bei einem FMCW-Radar mit dem Abstand zwischen dem Radarsystem und dem Objekt verknüpft ist, ermittelt, bei der die zweite Ableitung Null ist.

US 2003/0179130 beschreibt ein Radarsystem für ein Kraftfahrzeug. Das Radarsystem weist eine Signalverarbeitungseinrichtung auf, die eine Vielzahl von Kanälen aufweist, die von einer Sende- und Empfangseinrichtung gebildet werden. Die Signalverarbeitungseinheit dient zur Verarbeitung eines Beat-Signals, welches durch Mischen eines Sendesignals einer Radarwelle, die über die Sendeeinheit gesendet wird, mit einem Empfangssignal, welches durch die Empfangseinheit empfangen wird. Die Signalverarbeitungseinheit weist ferner eine erste Operationseinheit zur Durchführung einer Frequenz-Analyse am Beat-Signal und zur Generierung eines Distanz-Power-Spektrums für jeden der Kanäle auf. Die Signalverarbeitungseinheit weist ferner eine Vorhersageeinheit zur Festlegung eines Vorhersagepunkts auf. Der Vorhersagepunkt spezifiziert den Ort, wo ein Objekt vermutet wird, basierend auf Informationen, die nicht aus Spitzen des Distanz-Power-Spektrums gewonnen worden sind. Die Signalverarbeitungseinheit weist ferner eine zweite Operationseinheit zur Ermittlung eines direkten Power-Spektrums am vorhergesagten Punkt, der durch die oben genannte Vorhersageeinheit ermittelt worden ist und der auf einem Ergebnis der ersten Operationseinheit beruht, auf. Basierend auf den ermittelten Resultaten der ersten und zweiten Operationseinheiten werden sodann Informationen über das Objekt ermittelt.

DE 102 34 467 A1 betrifft ein Verfahren zur automatisierten Steuerung einer technischen Anlage mit einer Mehrzahl von zur Abwicklung von Prozessschritten datenseitig miteinander verschalteten Anlagenkomponenten, denen von einer zentralen Steuereinrichtung unter Berücksichtigung von dort eingehenden Prozessführungssignalen erzeugte Stellbefehle zugeführt werden, wobei in einer mobilen Bedieneinheit erzeugte Prozessführungssignale drahtlos an Schnittstellen übertragen und von diesen an die Steuereinrichtung weitergeleitet werden. Eine Freigabe derjenigen Anlagenkomponenten, für die bei der Erzeugung der zugehörigen Stellbefehle die von der mobilen Bedieneinheit eingehenden Prozessführungssignale berücksichtigt werden, wird anhand eines Ortskennwerts für die mobile Bedieneinheit vorgenommen, zu dessen Ermittlung die drahtlos mit der mobilen Bedieneinheit kommunizierenden Schnittstellen genutzt werden.

Der Erfindung liegt somit die Aufgabe zu Grunde, ein Radarsystem so weiter zu gestalten, dass Leistungsspitzen im Leistungsspektrum empfangener Radarsignale einer Plausibilitätsbewertung unterzogen werden, so dass eine zuverlässige Unterscheidung zwischen informationstragenden und störenden Radarsignalen ermöglicht wird.

Die Aufgabe wird mit dem in Anspruch 1 angegebenen Radarsystem sowie dem in Anspruch 7 angegebenen HMI System, dem in Anspruch 9 bezeichneten mobilen Bedien- und Beobachtungsgerät und dem in Anspruch 10 aufgeführten Computerprogrammprodukt gelöst. Weitere vorteilhafte Ausführungen der Erfindung sind in den Unteransprüchen angegeben.

Die Erfindung betrifft ein Radarsystem zur Lokalisierung eines mobilen Bedien- und Beobachtungsgeräts für die Automatisierungskomponenten einer technischen Anlage. Das Radarsystem verfügt über Mittel zur Erzeugung eines Frequenzspektrums auf der Grundlage empfangener Radarsignale und Auswertemittel zur Identifizierung mindestens einer spektralen Komponente des Frequenzspektrums. Typische spektrale Komponenten sind Leistungsspitzen im Frequenzspektrum der empfangenen Radarsignale. Das Radarsystem verfügt ferner über Mittel zur Bewertung der mindestens einen spektralen Komponente und Selektionsmittel zur Auswahl mindestens einer bewerteten spektralen Komponente zur Lokalisierung des mobilen Bedien- und Beobachtungsgeräts.

Die spektralen Komponenten oder Leistungsspitzen des Frequenzspektrums stehen typischerweise in einem direkten Zusammenhang zum Abstand zwischen dem Radarsystem und einem Radarstrahlen reflektierenden Objekt, wie z.B. einem Transponder. Das Frequenzspektrum kann das absolute Spektrum empfangener Radarsignale oder z.B. einen Frequenzunterschied zu ausgesendeten Radarstrahlen widerspiegeln.

Die Mittel zur Bewertung der mindestens einen spektralen Komponente des Frequenzspektrums dienen einer Plausibilitätsbewertung, um verschiedene und dynamisch veränderbare Leistungsspitzen des Spektrums eindeutig und zuverlässig entweder einem relevanten Messsignal oder einem Störsignal zuzuordnen.

Dies ermöglicht letztlich, Störsignale, die z.B. durch Mehrfachreflexionen entstanden sind, zu identifizieren und für die Bestimmung zur Lokalisierung des mobilen Bedien- und Beobachtungsgeräts auszuschließen. Mit Hilfe der Identifizierung der Leistungsspitzen und deren Bewertung kann somit die Zuverlässigkeit der Lokalisierung des mobilen Bedien- und Beobachtungsgeräts erheblich verbessert, bzw. die Fehlerrate für die Lokalisierung erheblich verringert werden.

Das gesamte Radarsystem ist als ein dynamisches und adaptives System ausgestaltet, bei dem die empfangenen Radarsignale kontinuierlich in ein Frequenzspektrum übertragen werden und die Auswerte-, Bewertungs- und Selektionsmittel, dazu ausgebildet sind, die jeweils aktuell empfangenen Radarsignale, bzw. die dazugehörigen Frequenzspektren zu analysieren und zu bewerten. Die Wiederhol- oder Taktrate mit der die Auswertung, Bewertung und Selektion einzelner spektraler Komponenten des Frequenzspektrums erfolgt, kann den jeweiligen Erfordernissen individuell angepasst werden.

Bei einer bevorzugten Ausführungsform der Erfindung ist das Radarsystem als frequenzmoduliertes Dauerstrich-Radarsystem zum Senden von Abfragesignalen und zum Empfang von Funkantwortsignalen ausgestattet. Mit Hilfe dieses, auch als Frequency Modulated Continous Wave (FMCW) bezeichneten Systems, ist zumindest die Bestimmung des Abstands zwischen dem mobilen Bedien- und Beobachtungsgerät und einem Objekt, welches Funkantwortsignale in Reaktion auf die Abfragesignale reflektiert oder sendet, möglich. Vorzugsweise ist hierbei das Radarsystem im mobilen Bedien- und Beobachtungsgerät implementiert und das Funkantwortsignal sendende Objekt, typischerweise ein Transponder, ist an der technischen Anlage angebracht.

Somit ermöglicht das Radarsystem eine Abstandsbestimmung zwischen mobilen Bedien- und Beobachtungsgerät und der technischen Anlage zur Verwaltung eines aktiven Bedienbereichs im Umkreis der technischen Anlage. Alternativ kann das Radarsystem auch an der technischen Anlage angebracht oder in die technische Anlage implementiert sein. Dies erfordert, dass das mobile Bedien- und Beobachtungsgerät über entsprechende Transponderfunktionalität verfügt.

Beim frequenzmodulierten Dauerstrich-Radarsystem ändert sich die Frequenz des Abfragesignals in einer periodischen Art und Weise und reflektierte Funkantwortsignale, die typischerweise eine Subträger-Modulation aufweisen, haben beim Eintreffen beim Radarsystem aufgrund des Laufzeitunterschieds zum reflektierendem Objekt oder Transponder, eine im Vergleich zur Frequenz des Sendesignals verschobene Trägerfrequenz. Dieser Frequenzunterschied stellt einen Laufzeitunterschied dar, der bei direkter Signalübermittlung zwischen Radarsystem und Transponder den zweifachen Abstand zwischen Radarsystem und Transponder entspricht. Wird das Frequenzspektrum der empfangenen Radarsignale als Frequenzverschiebungsspektrum bezüglich der Frequenz des Sendesignals dargestellt, so ist die Frequenz der Leistungsspitzen des Spektrums ein direktes Maß für die Entfernung zu einem reflektierenden Objekt.

Bei einer weiteren Ausführungsform der Erfindung sind die Auswertemittel zur Identifizierung der mindestens einen Leistungsspitze des Frequenzspektrums und die Mittel zur Evaluierung zur Bestimmung einer Gewichtungsfunktion in Abhängigkeit von der Frequenz der größten Leistungsspitze des Frequenzspektrums ausgebildet. Es wird hierbei implizit angenommen, dass die Frequenz der größten Leistungsspitze dem richtigen Abstand entspricht. Diese Annahme wird dann im Zuge des Bewertung entweder bestätigt oder aber widerlegt und ggf. durch eine andere Annahme ersetzt.

Frequenzunterschiede, die größer sind als der Frequenzunterschied der größten Leistungsspitze, d.h. Leistungsspitzen, die im Spektrum rechts von der größten Leistungsspitze liegen, beruhen daher mit einer großen Wahrscheinlichkeit auf Mehrfachreflexionen an z.B. Metalloberflächen. Die Gewichtungsfunktion ermöglicht, dass solch große Frequenzunterschiede bei der folgenden Auswertung und Auswahl weniger stark berücksichtigt werden.

Für Frequenzunterschiede im Spektrum, die kleineren Abständen entsprechen, als dem Frequenzunterschied der größten Leistungsspitze, beschreibt die Gewichtungsfunktion einen Schwellwert, der mit kleiner werdendem Frequenzunterschied ansteigt. Dieser Anstieg kann linear oder nicht linear erfolgen und kann den Erfordernissen und der Einsatzumgebung des Radarsystems variabel angepasst werden. Für kleinere Frequenzunterschiede, d.h. für kleinere Abstände zum reflektierenden Objekt, ist ein Anstieg der beim Radarsystem eintreffenden reflektierten Leistung aufgrund des geringeren Abstands zu erwarten. Es ist daher zweckmäßig, den Schwellwert beginnend von der Frequenz der stärksten Leistungsspitze ausgehend zu kleineren Frequenzunterschieden hin anzuheben. Damit wird implizit gesagt, dass kleinere Frequenzunterschiede mit einer, dem Schwellwert entsprechenden Dämpfung, die z.B. durch Abschattung hervorgerufen wird, berücksichtigt werden können. Die Auswertung kann in diesem Fall auch mit Hilfe einer Leistungsspitze erfolgen, die kleiner als die größte Leistungsspitze ist.

Die durch die Gewichtungsfunktion darstellbare Schwellwertfunktion kann wahlweise als harte Grenze zur Auswahl der mindestens einen spektralen Komponente oder aber lediglich als Hilfsmittel zur Bewertung der Leistungsspitze im Spektrum herangezogen werden. Erfüllen z.B. eine Vielzahl von Leistungsspitzen des Spektrums die durch die Gewichtungsfunktion definierten Kriterien, so ergibt sich, abhängig von den Umgebungsbedingungen, eine gewisse Wahrscheinlichkeit, dass die Auswertung sehr nahe an der Rauschgrenze des Radarsystems erfolgt. In einem solchen Fall können die Gewichtungsfaktoren für die einzelnen Leistungsspitzen oder aber der Verlauf der Gewichtungsfunktion variabel verändert werden.

Bei einer weiteren Ausführungsform der Erfindung verfügt das Radarsystem über Mittel zur Speicherung von Leistungsspitzen und Sequenzen von Leistungsspitzen mehrerer Frequenzspektren von Radarsignalen, die zu unterschiedlichen Zeitpunkten vom Radarsystem empfangen wurden. Die Mittel zur Speicherung ermöglichen insbesondere das Erstellen einer Statistik und einer statistischen Auswertung, die zur Bewertung einer jeden spektralen Komponente des Spektrums herangezogen werden können. Ist das mobile Bedien- und Beobachtungsgerät z.B. während zehn aufeinander folgender Abstandsmessungen des Radarsystems stationär, so ist davon auszugehen, dass die entsprechenden Spektren eine große Ähnlichkeit aufweisen. Hat jedoch z.B. bei der fünften Messung eine der Leistungsspitzen des Spektrums eine deutlich geringere Intensität als in den vorangegangenen Messungen, die möglicherweise unter der durch die Gewichtungsfunktion beschriebenen Schwellwertgrenze liegt, so kann diese fünfte Messung hinsichtlich dieser abweichenden Leistungsspitze unberücksichtigt bleiben. Dies ist z.B. zweckmäßig, wenn sich die Umgebungsbedingungen des Radarsystems temporär ändern und wenn eine direkte Sichtverbindung zwischen dem Transponder und dem Radarsystem zeitweise unterbrochen ist, was unweigerlich zu einer Abschwächung der entsprechenden Frequenzkomponente im Frequenzspektrum führt.

Bei einer weiteren Ausführungsform der Erfindung sind die Mittel zur Evaluierung des Radarsystems zur Bestimmung eines Konfidenzwerts für jede Leistungsspitze des Frequenzspektrums ausgebildet. Die Bestimmung des Konfidenzwerts wird zweckmä-βig mit Hilfe der Gewichtungsfunktion und / oder mit Hilfe einer Vielzahl von abgespeicherten Leistungsspitzen vorheriger empfangener Frequenzspektren durchgeführt. Ferner können zur Bestimmung des Konfidenzwerts für jede Leistungsspitze auch die Leistungen benachbarter Leistungsspitzen effektiv verwertet werden. Dies ist vor allem dann von Vorteil, wenn das mobile Bedien- und Beobachtungsgerät stationär ist und z.B. eine einzige der Leistungsspitzen in einer Abfolge von sequentiell erfassten Frequenzspektren von vorherigen Werten abweicht.

Bei einer weiteren Ausführungsform der Erfindung sind die Mittel zur Evaluierung des Radarsystems dazu ausgebildet, die Gewichtungsfunktion dynamisch zu modifizieren. Dies ermöglicht eine dynamische Anpassung der Auswertung des Frequenzspektrums zur Selektion eine oder einige weniger spektralen Komponenten des Spektrums zur zuverlässigen Entfernungsbestimmung.

In einem weiteren Aspekt betrifft die Erfindung ein HMI System mit zumindest einem mobilen Bedien- und Beobachtungsgerät für die Automatisierungskomponenten einer technischen Anlage und mit einem frequenzmodulierenden Dauerstrich-Radarsystem zur Lokalisierung des mobilen Bedien- und Beobachtungsgeräts. Hierbei verfügt das frequenzmodulierende Dauerstrich-Radarsystem über Mittel zur Erzeugung eines Frequenzspektrums auf der Grundlage empfangener Radarsignale, über Auswertemittel zur Identifizierung mindestens einer spektralen Komponente des Frequenzspektrums, über Mittel zur Bewertung oder Evaluierung der mindestens einen spektralen Komponente und über Selektionsmittel zur Auswahl der mindestens einen bewerteten oder evaluierten spektralen Komponente zur Lokalisierung des mobilen Bedien- und Beobachtungsgeräts.

Bei einer weiteren Ausführungsform der Erfindung verfügt das HMI System über Mittel zur berührungslosen Datenübertragung zwischen dem mobilen Bedien- und Beobachtungsgerät und den Automatisierungskomponenten sowie über Auswertemittel zur Verwaltung eines aktiven Bedienbereichs, welche die Automatisierungskomponenten für sicherheitsrelevante Bedienungen der technischen Anlage über das mobile Bedien- und Beobachtungsgerät nur dann aktivieren, wenn das Radarsystem detektiert, dass sich das mobile Bedien- und Beobachtungsgerät innerhalb des aktiven Bereichs befindet. Somit können sicherheitsrelevante Funktionen der technischen Anlage abhängig von der Position oder vom Abstand des mobilen Bedien- und Beobachtungsgeräts von der technischen Anlage freigeschaltet oder deaktiviert werden.

In einem weiteren Aspekt betrifft die Erfindung ein mobiles Bedien- und Beobachtungsgerät für die Automatisierungskomponenten einer technischen Anlage mit einem frequenzmodulierenden Dauerstrich-Radarsystem zur Lokalisierung des mobilen Bedien- und Beobachtungsgeräts. Hierbei verfügt das frequenzmodulierende Dauerstrich-Radarsystem über Mittel zur Erzeugung eines Frequenzspektrums auf der Grundlage empfangener Radarsignale, über Auswertemittel zur Identifizierung mindestens einer spektralen Komponente des Frequenzspektrums, über Mittel zur Bewertung der mindestens eine spektralen Komponente und über Selektionsmittel zur Auswahl der mindestens einen bewerteten spektralen Komponente zur Lokalisierung des mobilen Bedien- und Beobachtungsgeräts.

In einem weiteren Aspekt betrifft die Erfindung ein Computerprogrammprodukt für ein Radarsystem zur Lokalisierung eines mobilen Bedien- und Beobachtungsgeräts für die Automatisierungskomponenten einer technischen Anlage mit Programmmitteln, die zur Durchführung der folgenden Schritte geeignet sind: Erzeugung eines Frequenzspektrums auf der Grundlage empfangener Radarsignale, Identifizierung mindestens einer spektralen Komponente des Frequenzspektrums, Bewertung der mindestens einen spektralen Komponente und Auswahl der mindestens einen bewerteten spektralen Komponente zur Lokalisierung des mobilen Bedien- und Beobachtungsgeräts. Das Computerprogrammprodukt kann hierbei wahlweise im mobilen Bedienund Beobachtungsgerät oder aber in den Automatisierungskomponenten der technischen Anlage implementiert sein. Wahlweise können die Programmmittel des Computerprogrammprodukts auch auf beide Komponenten des HMI Systems, nämlich das mobile Bedien- und Beobachtungsgerät und die Automatisierungskomponenten verteilt implementiert sein.

Bevorzugte Ausführungsformen der Erfindung werden nachfolgend anhand der Zeichnungen näher erläutert. Es zeigen:
- Figur 1: ein schematisches Blockdiagramm des erfindungsgemäßen HMI Systems,
- Figur 2: eine beispielhafte Darstellung eines Frequenzspektrums,
- Figur 3: ein Flussdiagramm zur Auswertung des Frequenzspektrums,
- Figur 4: ein schematisches Blockdiagramm des Radarsystems.

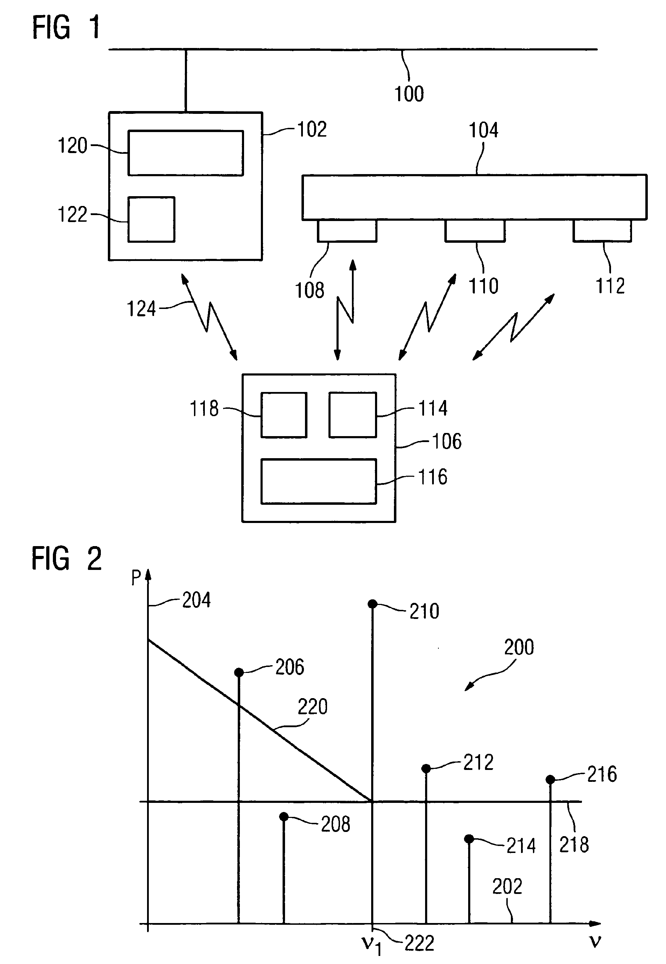

Figur 1 zeigt beispielhaft eine technische Anlage 104 mit technischen Betriebsmitteln, die z.B. Bestandteil einer fertigungs- oder prozesstechnischen Vorrichtung sein können. Zu deren Steuerung sind Automatisierungskomponenten 102 vorhanden, die auf die technischen Betriebsmittel, insbesondere durch Vermittlung von Messwertgebern, Stellungsreglern und verschiedenen anderen so genannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens ein Reflektormodul, welches auch als Transponder oder TAG bezeichnet wird, vorzugsweise über eine Reihe von Transpondern 108, 110, 112, die an verschiedenen Referenzpunkten an der technischen Anlage 104 angebracht sind. Die Transponder sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung bezüglich der Position mindestens eines der Transponder 108, 110, 112 selbsttätig durchzuführen. Die Transponder 108, 110, 112 müssen hierbei keine Signalauswertung vornehmen.

Ebenso ist eine Datenübertragung zwischen den Automatisierungskomponenten 102 und den einzelnen Transpondern 108, 110, 112 zur Lokalisierung des mobilen Bedien- und Beobachtungsgeräts 106 nicht nötig. Daher können die einzelnen Transponder 108, 110, 112 sehr robust und kostengünstig in großer Stückzahl hergestellt werden.

Das Lokalisierungsmodul 114 ist vorzugsweise als FMCW-Radar ausgebildet und die einzelnen Transpondern 108, 110, 112 sind zur Modulation empfangener Radarsignale und zum Reflektieren daraus resultierender modulierter Radarsignale ausgebildet. Mittels einer von den Transpondern 108, 110, 112 durchgeführten Subträger-Modulation können die von den Transpondern reflektierten Radarsignale selektiv ausgewertet werden. Die Subträger-Modulation ermöglicht somit eine Trennung von Hintergrundsignalen und Signalen, die an den Transpondern reflektiert wurden. Durch eine entsprechende Subträger-Filterung im Lokalisierungsmodul 114 kann somit, mit Hilfe eines FMCW-Radars, eine eindeutige Entfernungsmessung für stationäre Ziele sogar mit einem Empfänger im Lokalisierungsmodul 114 realisiert werden, der lediglich den Realteil des Empfangssignal verarbeitet. Insbesondere die Implementierung eines solchen Empfängers im Lokalisierungsmodul 114 ermöglicht eine kostengünstige und Platz sparende Realisierung eines Empfängerkonzepts für das erfindungsgemäße HMI System zur Lokalisierung des mobilen Bedien- und Beobachtungsgeräts.

Figur 2 zeigt schematisch eine Darstellung eines ermittelten Frequenzspektrums 200. Das Frequenzspektrum ist als ein Diagramm dargestellt, bei dem Leistung 204 gegen eine Frequenz oder Frequenzverschiebung 202 gezeigt sind. Das Spektrum weist, als Beispiel sechs einzelne identifizierbare Leistungsspitzen oder Peaks 206, 208, 210, 212, 214 und 216 auf, die jeweils eine unterschiedliche Leistung haben und einer unterschiedlichen Frequenzverschiebung, bzw. einem unterschiedlichen Abstand zum reflektierenden Objekt, entsprechen können. Ziel der erfindungsgemäßen Plausibilitätsbewertung ist es, herauszufinden, ob die einzelnen Leistungsspitzen 206,..., 216 tatsächlich einem Abstand zu einem der Transponder entsprechen oder ob sie durch Störsignale, wie z.B. Reflektionen an Metalloberflächen hervorgerufen wurden.

Die einzelnen Leistungsspitzen 206,...,216 sind als solche identifizierbar, wenn sie aus dem systeminhärenten Rauschen herausragen. Ferner ist eine Entscheidungsschwelle 218 dargestellt, die der minimalen Entscheidungsgrenze entspricht Diese minimale Entscheidungsgrenze 218 kann einen vordefinierten Abstand zur Systemrauschgrenze haben. Abhängig von der Implementierung kann diese minimale Entscheidungsgrenze z.B. durch eine Kalibrierung des Radarsystems den Erfordernissen individuell angepasst werden.

Leistungsspitzen 208, 214, die unterhalb Entscheidungsgrenze 218 liegen, werden generell für die Auswertung des Spektrums nicht berücksichtigt, d.h. das Signal-zu-Rausch Verhältnis (SNR) ist für eine Auswertung zu gering. Im Vergleich der Leistungsspitzen 206, ..., 216 stellt die Leistungsspitze 210 diejenige mit der größten Leistung dar. Die zugehörige Frequenz ν₁ 222 bildet eine Basis zur Berechnung der Gewichtungsfunktion 220. In diesem Beispiel ist die Gewichtungsfunktion 220 als linear fallende Gerade dargestellt, die den Leistungspeak 210 in Höhe der Entscheidungsgrenze 218 schneidet. Die Steigung dieser Geraden 220 kann hierbei den Umgebungsparametern individuell angepasst werden. Die Gewichtungsfunktion kann zum einen als Schwellwertfunktion aber auch in abgeschwächter Form zur Bestimmung von Konfidenzwerten für jede der Leistungsspitzen 206, ...., 216 herangezogen werden.

Der Anstieg der Gewichtungsfunktion 220 mit kleiner werdender Frequenz trägt dem Aspekt Rechnung, dass Reflexionen mit kleinerer Frequenzverschiebung Reflexionen von gering beabstandeten Objekten entsprechen könnten, die demnach aufgrund ihrer Abstrahlcharakteristik eine höhere Leistung aufweisen müssen. Eine geringere als erwartete Leistung kann darauf hindeuten, dass zwischen dem Transponder und dem Beobachtungsgerät ein Hindernis liegt, welches zu einer Signalabschattung führen kann, oder dass die Leistungsspitze von einem systemfremden Störer verursacht wurde.

Die Leistungsspitzen 212 und 216, die rechts von der größten Leistungsspitze 210 im Spektrum liegen, repräsentieren einen größeren Abstand, bzw. eine größere Laufzeit der Radarsignale, die mitunter auch von einer systemfremden Störung herrühren können. Für besonders große Laufzeitunterschiede, die z.B. der Leistungsspitze 216 entsprechen, kann daher mit einer großen Wahrscheinlichkeit angenommen werden, dass die Leistungsspitze 216 auf Mehrfachreflexionen einer reflektierenden Oberfläche beruht. Es ist daher zweckmäßig, von der Leistungsspitze 210 aus Leistungsspitzen einer größeren Frequenzverschiebung mit niedrigeren, oder zumindest gleichbleibenden Konfidenzwerten zu versehen.

Mit Hilfe des Speichermediums können die einzelnen identifizierten Leistungsspitzen 206,....,216 sukzessive abgespeichert und zur Erstellung einer Statistik verwendet werden. Insbesondere erlaubt die statistische Auswertung abgespeicherter Leistungsspitzen eine zuverlässigere Verwertung einzelner Leistungsspitzen und eine zuverlässige Bestimmung von Konfidenzwerten für aktuell auszuwertende Frequenzspektren. In dem in Figur 2 gezeigten Spektrum erfüllen die Leistungsspitzen 206 und 210 die erforderlichen Plausibilitätskriterien. Leistungsspitzen 212 und 216 erfüllen ebenfalls die erforderlichen Kriterien, werden jedoch zweckmäßig aufgrund ihrer relativen Lage zur Frequenz ν₁ 222 der maximalen Leistungsspitze 210 mit unterschiedlichen Konfidenzwerten versehen.

Aufgrund von Bewegungen des mobilen Bedien- und Beobachtungsgeräts verschiebt sich die horizontale als auch die vertikale Position sämtlicher Leistungsspitzen. Je nach Wiederholrate und Geschwindigkeit der Bewegung ändern sich die dargestellten Leistungsspitzen abrupt oder kontinuierlich. Unter Zuhilfenahme abgespeicherter Leistungsspitzen können z.B. abrupte Veränderungen von Leistungsspitzen detektiert und der erfindungsgemäßen Plausibilitätsbewertung unterzogen werden. Verändern sich z.B. die Leistungsspitzen 208, ..., 216 nur gering in einem gewissen Zeitintervall und fällt z.B. die Leistung der Leistungsspitze 206 abrupt auf einen Wert unterhalb der Gewichtungsfunktion 220 oder sogar der minimalen Entscheidungsschwelle 218 ab, so ist davon auszugehen, dass die leicht abgeschattete Sichtverbindung zu dem entsprechenden reflektierenden Objekt zeitweilig unterbrochen wurde oder dass ein sonstiger Messfehler vorliegt. In diesem Fall kann aufgrund der statistischen Auswertung der Konfidenzwert der Leistungsspitze 206 derart angehoben werden, so dass die Leistungsspitze 206 nach wie vor zur Ermittlung des Abstands des mobilen Bedien- und Beobachtungsgeräts herangezogen werden kann.

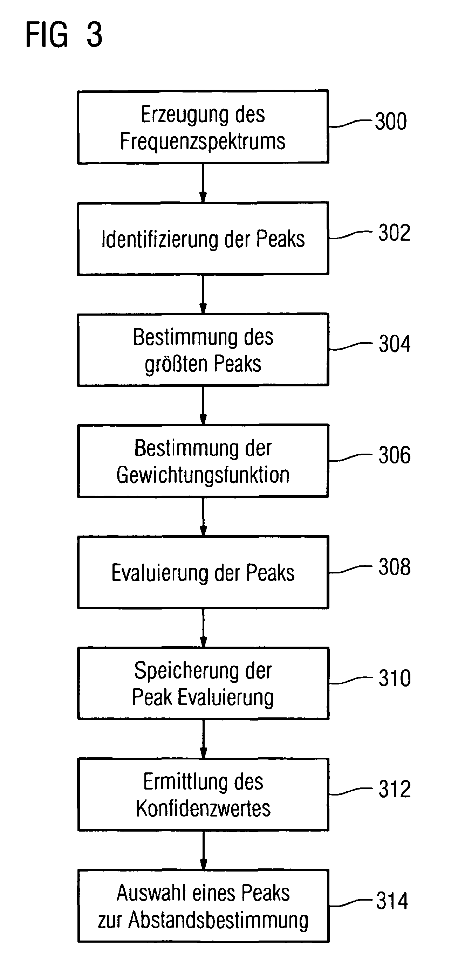

Figur 3 zeigt ein Flussdiagramm zur erfindungsgemäßen Auswertung eines Frequenzspektrums zur Abstandsbestimmung zwischen einem mobilen Bedien- und Beobachtungsgerät und einer technischen Anlage. In einem ersten Schritt wird auf Grundlage empfangener Radarsignale ein Frequenzspektrum erzeugt. Das Frequenzspektrum kann sich entweder auf absolute Frequenzen oder aber auf Differenzfrequenzen bezüglich der Sendefrequenz des Radarsystems beziehen. Typischweise wird das Frequenzspektrum mit Hilfe einer Fast Fourier Transformation (FFT) durchgeführt. Andere bekannte Berechnungsarten für die spektrale Ermittlung, wie z.B. autoregressive Verfahren(AR) oder ähnliche können ebenso implementiert werden.

Nach Erzeugung des Spektrums werden in Schritt 302 einzelne Peaks oder Leistungsspitzen des Spektrums oberhalb der Rauschgrenze identifiziert. Im folgenden Schritt 304 wird aus den identifizierten Leistungsspitzen die Leistungsspitze mit der größten Leistung bestimmt. Die zugehörige Frequenz zu diesem größten Peak wird nachfolgend zur Bestimmung der Gewichtungsfunktion genutzt. Ferner kann die Lage des größten Peaks dazu dienen, das Spektrum in einen Nahbereich links des größten Peaks und in einen Fernbereich rechts des größten Peaks aufzuteilen.

Leistungsspitzen, die im Fernbereich des Spektrums liegen, können z.B. mit unterschiedlichen Konfidenzwerten versehen werden, da bei diesen die Wahrscheinlichkeit höher ist, dass eine Mehrfachreflexion von Radarsignalen erfolgt ist. Im folgenden Schritt 306 wird ausgehend von der Frequenz des größten Peaks die Gewichtungsfunktion bestimmt. Z.B. kann die Gewichtungsfunktion unterhalb der größten Spitze die in Figur 2 dargestellte Gerade 220 sein, während sie für Frequenzen oberhalb der größten Spitze eine durch eine Gerade mit der Steigung 0 darstellbar 218 ist. Die Gewichtungsfunktion kann einen linearen oder sogar nicht linearen Verlauf aufweisen und ihre Steigung kann dem Erfordernis, dass lediglich eine gewisse Anzahl von Leistungsspitzen oberhalb der Gewichtungsfunktion liegen soll, dynamisch angepasst werden.

Nachdem die Gewichtungsfunktion in Schritt 306 bestimmt wurde, können im Schritt 308 die einzelnen Peaks oder Leistungsspitzen verwertet werden. Typischerweise werden sämtliche Leistungsspitzen, die oberhalb der Gewichtungsfunktion liegen, positiv und solche, die zwischen der Rauschgrenze und der Gewichtfunktion liegen, negativ bewertet. Dieser Bewertung kann sogar bereits in einer Selektion münden. So können z.B. sämtliche Leistungsspitzen, die unterhalb der Gewichtungsfunktion von einer weiteren Auswertung ausgeschlossen werden. Andere Ausführungsformen ermöglichen eine fein abgestufte Bewertung der einzelnen Peaks. Damit können Signale, die nur temporär kleiner als die Gewichtfunktion sind, für die statistische Bewertung herangezogen werden.

Nach der Bewertung der Peaks werden die bewerteten Peaks im Schritt 310 abgespeichert, um somit eine Statistik zu erstellen, die für nachfolgende Bewertungen herangezogen werden kann. Sind bereits mehrere bewertete Peaks abgespeichert, so können diese im folgenden Schritt 312 zur Ermittlung bzw. zur Aktualisierung des Konfidenzwerts jedes einzelnen Peaks herangezogen werden. Jeder zu einer Leistungsspitze ermittelte Konfidenzwert kann zusätzlich mit seiner Leistungsspitze abgespeichert werden. Liegen noch keine Daten im Speicher vor, so kann die Ermittlung des Konfidenzwerts gänzlich auf der Grundlage der Bewertung der Peaks aus Schritt 308 erfolgen. Nach der Ermittlung der Konfidenzwerte können schließlich im letzten Schritt 314 einer oder einige wenige Peaks oder Leistungsspitzen zur Abstandsbestimmung ausgewählt und zur Umsetzung in eine Distanz weiterverarbeitet werden.

Es sei angemerkt, dass das dargestellte Flussdiagramm entsprechend der Wiederholrate des Radarsystems kontinuierlich angewendet wird. Somit wird gewährleistet, dass das Radarsystem dynamisch auf Veränderungen im Frequenzspektrum reagiert und jeweils nur die aktuell plausibelsten Leistungsspitzen zur Abstandsbestimmung heranzieht.

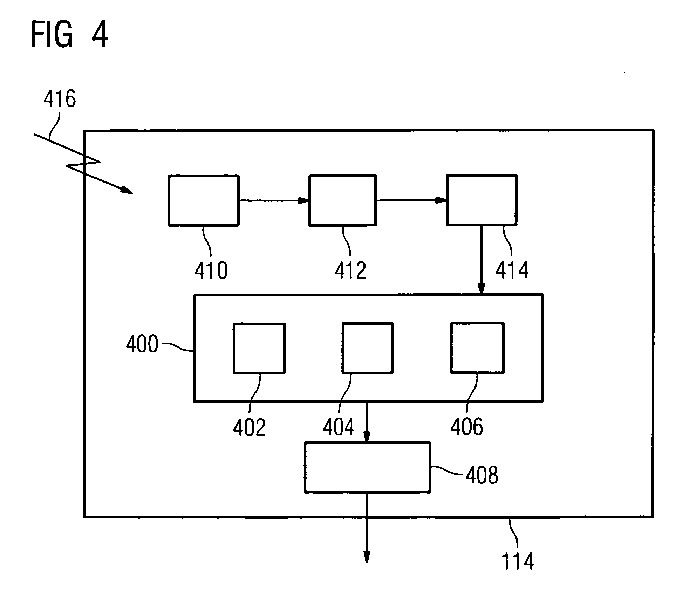

Figur 4 zeigt ein Blockdiagramm des Lokalisierungsmoduls 114, welches ein erfindungsgemäße Radarsystem implementiert hat. Das Lokalisierungssystem 114 oder Radarsystem hat einen Empfänger 410, eine Demodulationseinheit 412, einen Spektrumgenerator 414, eine Auswerteeinheit 400 sowie ein Abstandsmodul 408. Die Auswerteeinheit 400 verfügt ferner über ein Konfidenzmodul 402, einen Speicher 404 sowie einen Spektrumanalysator 406.

Radarsignale 416, die z.B. von einem Transponder als Funkantwortsignale an das Radarsystem zurückgesendet werden, können vom Empfänger oder von der Antenne 410 empfangen werden und in elektrische Signale umgewandelt werden. Diese elektrischen Signale werden dann an die Demodulationseinheit 412 weitergeleitet, die es ermöglicht, modulierte Transpondersignale von Hintergrundsignalen zu separieren. Die demodulierten und einem Transponder zuzuordnenden Signale werden dann mit Hilfe des Spektrumgenerators 414 in ein Frequenzspektrum überführt. Dieses Frequenzspektrum stellt typischerweise spektrale Verschiebungen zwischen Sendesignalen und Empfangssignalen 416 des Radarsystems dar.

Das so erzeugte Frequenzspektrum wird schließlich an die Auswerteeinheit 400 weitergeleitet. Mit Hilfe des Spektrumanalysators 406 können nun die einzelnen Peaks oder Leistungsspitzen des Frequenzspektrums identifiziert, untereinander verglichen und analysiert werden. Der Spektrumanalysator 406 ermöglicht somit z.B. die Ermittlung des stärksten Peaks innerhalb des Frequenzspektrums. Ferner kann mit Hilfe des Spektrumanalysators die Gewichtungsfunktion bestimmt werden. Mit Hilfe des Konfidenzmoduls können einzelne Konfidenzwerte für jede Leistungsspitze des Spektrums aufbauend auf den Ergebnissen des Spektrumanalysators ermittelt werden. Konfidenzwerte als auch Daten des analysierten Spektrums können mit Hilfe des Speichermoduls 404 abgespeichert werden.

Das Abstandsmodul 408 ist schließlich in der Lage, mit Hilfe ermittelter Konfidenzwerte, abgespeicherter und statistischer Daten sowie Ergebnissen der aktuellen, spektralen Analyse einzelne Leistungsspitzen des Spektrums zu selektieren und darauf aufbauend eine Abstandsbestimmung durchzuführen.

## Patentansprüche

1. Frequenzmoduliertes Danerstrich 1. Radarsystem zur Lokalisierung eines mobilen Bedien- und Beobachtungsgeräts für die Automatisierungskomponenten einer technischen Anlage mit
- Mitteln zur Erzeugung (414) eines Frequenzspektrums (200) auf der Grundlage empfangener Radarsignale (416),
- Auswertemitteln (406) zur Identifizierung mindestens einer Leistungsspitze des Frequenzspektrums (200),
- Mitteln zur Bewertung (402) der mindestens einen Leistungsspitze mit einem Schwellwert
- Selektionsmitteln (408) zur Auswahl der mindestens einen bewerteten Leistungsspitze zur Lokalisierung des mobilen Bedien- und Beobachtungsgeräts, wobei das Radarsystem **dadurch gekennzeichnet ist, dass** die Mittel zur Bewertung zur Bestimmung einer Gewichtungsfunktion (220) ausgestaltet sind, wobei aus den identifizierten Leistungsspitzen die Leistungsspitze mit der größten Leistung bestimmt wird und mit der zu dieser größten Leistung zugehörigen Frequenz die Gewichtungsfunktion bestimmt, wird und wobei durch die Gewichtungsfunktion der Schwellwert dargestellt wird.

2. Radarsystem nach Anspruch 1, wobei das Radarsystem zum Senden von Abfragesignalen und zum Empfang von Funkantwortsignalen (416) und zumindest zur Bestimmung eines Abstands zwischen dem mobilen Bedien- und Beobachtungsgerät und einem Objekt (108, 110, 112), welches Funkantwortsignale in Reaktion auf die Abfragesignale reflektiert oder sendet, ausgebildet ist.

3. Radarsystem nach einem der Ansprüche 1 bis 2, mit Mitteln zur Speicherung (404) von Leistungsspitzen (206, 208, 210, 212, 214) und Sequenzen von Leistungsspitzen mehrerer Frequenzspektren (200) von Radarsignalen, die zu unterschiedlichen Zeitpunkten vom Radarsystem empfangen wurden.

4. Radarsystem nach Anspruch 3, wobei die Mittel zur Speicherung die Erstellung einer Statistik und eine statistische Auswertung ermöglichen, wobei die Statistik und die statistische Auswertung zur Bewertung einer jeden spektralen Komponente des Spektrums herangezogen werden können.

5. Radarsystem nach einem der Ansprüche 1 bis 4, wobei die Mittel zur Bewertung (402)zur Bestimmung eines Konfidenzwertes für jede Leistungsspitze des Frequenzspektrums ausgebildet sind.

6. Radarsystem nach einem der Ansprüche 3 bis 5, wobei die Mittel zur Bewertung (402) dazu ausgebildet sind, die Gewichtungsfunktion dynamisch zu modifizieren.

7. Human Machine Interface System mit zumindest einem mobilen Bedien- und Beobachtungsgerät (106) für die Automatisierungskomponenten (102) einer technischen Anlage (104) und mit einem frequenz-moduliertem Dauerstrich Radarsystem nach Anspruch 1 zur Lokalisierung des mobilen Bedien- und Beobachtungsgeräts.

8. Human Machine Interface System nach Anspruch 7, mit
- Mitteln zur berührungslosen Datenübertragung (118, 122) zwischen dem mobilen Bedien- und Beobachtungsgerät (106) und den Automatisierungskomponenten (102),
- Auswertemitteln zur Verwaltung eines aktiven Bedienbereichs, welche die Automatisierungskomponenten für sicherheitsrelevante Bedienungen der technischen Anlage über das mobile Bedien- und Beobachtungsgerät nur dann aktivieren, wenn das Radarsystem detektiert, dass sich das mobile Bedien- und Beobachtungsgerät innerhalb des aktiven Bereichs befindet.

9. Mobiles Bedien- und Beobachtungsgerät (106) für die Automatisierungskomponenten (102) einer technischen Anlage und (104) mit einem frequenzmoduliertem Dauerstrich Radarsystem nach Anspruch 1 zur Lokalisierung des mobilen Bedien- und Beobachtungsgeräts.

10. Computerprogrammprodukt für ein frequenzmoduliertes Dauerstrich Radarsystem zur Lokalisierung eines mobilen Bedien- und Beobachtungsgeräts (106) für die Automatisierungskomponenten (102) einer technischen Anlage (104) mit Programmmitteln, die zur Durchführung folgender Schritte geeignet sind:
- Erzeugung eines Frequenzspektrums (200) auf der Grundlage empfangener Radarsignale,
- Identifizierung mindestens einer Leistungsspitze des Frequenzspektrums,
- Bewertung der mindestens einen Leistungsspitze mit einem Schwellwert,
- Auswahl der mindestens einen bewerteten Leistungsspitze zur Lokalisierung des mobilen Bedien- und Beobachtungsgeräts, **dadurch gekennzeichnet, dass** zur Bewertung eine Gewichtungsfunktion (220) derart bestimmt wird, dass aus den identifizierten Leistungsspitzen, die Leistungsspitze mit der größten Leistung bestimmt wird und über die zugehörige Frequenz zu dieser Leistungsspitze die Gewichtungsfunktion bestimmt wird, wobei durch die Gewichtungsfunktion der Schwellwert dargestellt wird.

## Claims

1. Frequency-modulated continuous wave radar system for localising a mobile control and monitoring device for the automation components of a technical system having
- means for generating (414) a frequency spectrum (200) on the basis of received radar signals (416),
- analysis means (406) for identifying at least one power peak of the frequency spectrum (200),
- means for evaluating (402) the at least one power peak, with a threshold value,
- selection means (408) for selecting the at least one evaluated power peak for localising the mobile control and monitoring device, wherein the radar system is **characterised in that** the means for evaluating are configured to determine a weighting function (220), wherein the power peak with the greatest power is determined from the identified power peaks and the weighting function with the frequency associated with this greatest power is determined and wherein the threshold value is represented by the weighting function.

2. Radar system according to claim 1, wherein the radar system is embodied to transmit query signals and to receive radio response signals (416) and at least to determine a distance between the mobile control and monitoring device and an object (108, 110, 112), which reflects or transmits radio response signals in response to the query signals.

3. Radar system according to one of claims 1 to 2, having means for storing (404) power peaks (206, 208, 210, 212, 214) and sequences of power peaks of several frequency spectra (200) of radar signals, which were received by the radar system at different points in time.

4. Radar system according to claim 3, wherein the means for storing allow for the generation of statistics and a statistical analysis, wherein the statistics and the statistical analysis can be used to evaluate each spectral component of the spectrum.

5. Radar system according to one of claims 1 to 4, wherein the means for evaluating (402) are embodied to determine a confidence value for each power peak of the frequency spectrum.

6. Radar system according to one of claims 3 to 5, wherein the means for evaluating (402) are embodied to dynamically modify the weighting function.

7. Human-machine interface system having at least one mobile control and monitoring device (106) for the automation component (102) of a technical system (104) and having a frequency-modulated continuous wave radar system according to claim 1 for localising the mobile control and monitoring device.

8. Human-machine interface system according to claim 7, having
- means for contactless data transmission (118, 122) between the mobile control and monitoring device (106) and the automation components (102),
- analysis means for managing an active control area, which only activate the automation components for safety-relevant operations of the technical system by way of the mobile control and monitoring device if the radar system detects that the mobile control and monitoring device is within the active area.

9. Mobile control and monitoring device (106) for the automation components (102) of a technical system and (104) having a frequency-modulated continuous wave radar system according to claim 1 for localising the mobile control and monitoring device.

10. Computer program product for a frequency-modulated continuous wave radar system for localizing a mobile control and monitoring device (106) for the automation components (102) of a technical system (104) having program means, which are suited to implementing the following steps
- generating a frequency spectrum (200) on the basis of received radar signals,
- identifying at least one power peak of the frequency spectrum
- evaluating the at least one power peak with a threshold value,
- selecting the at least one evaluated power peak for localising the mobile control and monitoring device, **characterised in that**, for evaluation purposes, a weighting function (220) is determined such that the power peak with the greatest power is determined from the identified power peaks and, the weighting function is determined by way of the associated frequency for this power peak, wherein the threshold value is represented by the weighting function.

## Revendications

1. Système radar à ondes continues et à modulation de fréquence pour la localisation d'un appareil mobile de commande et d'observation des composants d'automatisation d'une installation technique, comprenant
- des moyens de production ( 414 ) d'un spectre ( 200 ) de fréquence sur la base de signaux ( 416 ) radar reçus,
- des moyens ( 406 ) d'exploitation pour l'identification d'au moins une pointe de puissance du spectre ( 200 ) de fréquence,
- des moyens d'évaluation ( 402 ) de la au moins une pointe de puissance par une valeur de seuil,
- des moyens ( 408 ) de sélection pour la sélection de la au moins une pointe de puissance évaluée pour la localisation de l'appareil mobile de commande et d'observation, dans lequel le système radar est **caractérisé en ce que** les moyens d'évaluation sont conformés pour la détermination d'une fonction ( 220 ) de pondération, dans lequel, à partir des pointes de puissance identifiées, la pointe de puissance ayant la puissance la plus grande est déterminée et, par la fréquence associée à cette puissance la plus grande, la fonction de pondération est déterminée et dans lequel la valeur de seuil est représentée par la fonction de pondération.

2. Système radar suivant la revendication 1, dans lequel le système radar est constitué pour l'émission de signaux d'interrogation et pour la réception de signaux ( 416 ) radio de réponse et au moins pour la détermination d'une distance entre l'appareil mobile de commande et d'observation et un objet ( 108, 110, 112 ) qui réfléchit ou émet des signaux radio de réponse en réaction aux signaux d'interrogation.

3. Système radar suivant l'une des revendications 1 à 2, comprenant des moyens de mémorisation ( 404 ) de pointes ( 206, 208, 210, 212, 214 ) de puissance et de séquences de pointes de puissance de plusieurs spectres ( 200 ) de fréquence de signaux radar qui ont été reçus par le système radar à des instants différents.

4. Système radar suivant la revendication 3, dans lequel les moyens de mémorisation rendent possible l'élaboration d'une statistique et d'une exploitation statistique, la statistique et l'exploitation statistique pouvant être mises à profit pour l'évaluation de l'une de chaque composante spectrale du spectre.

5. Système radar suivant l'une des revendications 1 à 4, dans lequel les moyens d'évaluation ( 402 ) sont constitués pour la détermination d'une valeur de confiance pour chaque pointe de puissance du spectre de fréquence.

6. Système radar suivant l'une des revendications 3 à 5, dans lequel les moyens d'évaluation ( 402 ) sont constitués pour modifier dynamiquement la fonction de pondération.

7. Système d'interface homme-machine, ayant au moins un appareil ( 106 ) mobile de commande et d'observation des composants ( 102 ) d'automatisation d'une installation ( 104 ) technique et ayant un système de radar à ondes continues et à modulation de fréquence suivant la revendication 1 pour la localisation de l'appareil mobile de commande et d'observation.

8. Système homme-machine suivant la revendication 7, ayant
- des moyens de transmission ( 118, 122 ) de données sans contact entre l'appareil ( 106 ) mobile de commande et d'observation et les composants ( 102 ) d'automatisation,
- des moyens d'exploitation pour la gestion d'une zone de commande active, qui n'activent les composants d'automatisation, pour des commandes de sécurité de l'installation technique par l'intermédiaire de l'appareil mobile de commande et d'observation, que si le système radar détecte que l'appareil mobile de commande et d'observation se trouve dans la zone active.

9. Appareil ( 106 ) mobile de commande et d'observation des composants ( 102 ) d'automatisation d'une installation ( 104 ) technique, ayant un système radar à ondes continues et à modulation de fréquence suivant la revendication 1 pour la localisation de l'appareil mobile de commande et d'observation.

10. Produit de programme informatique pour un système radar à ondes continues et à modulation de fréquence pour la localisation d'un appareil ( 106 ) mobile de commande et d'observation des composants ( 102 ) d'automatisation d'une installation ( 104 ) technique, ayant des moyens de programme qui sont propres à effectuer les stades suivants :
- production d'un spectre ( 200 ) de fréquence sur la base de signaux radar reçus,
- identification d'au moins une pointe de puissance du spectre de puissance,
- évaluation de la au moins une pointe de puissance par une valeur de seuil,
- sélection d'au moins une pointe de puissance évaluée pour la localisation de l'appareil mobile de commande et d'observation, **caractérisé en ce que** pour l'évaluation on détermine une fonction ( 220 ) de pondération de manière à déterminer la pointe de puissance ayant la puissance la plus grande parmi les pointes de puissance identifiées et on détermine la fonction de pondération par la fréquence associée à cette pointe de puissance, dans lequel la fonction de puissance est représentée par la valeur de seuil.
